# EUROPEAN PATENT SPECIFICATION

(11) **EP 3 563 014 B1**
(45) Date of publication and mention of the grant of the patent: **01.12.2021**
(21) Application number: 17823161.9
(22) Date of filing: 22.12.2017
(51) Int. Cl.: E04D 3/32, H02S 20/25, E04D 3/35, E04B 7/22, B29C 48/154

(54) **SOLAR ROOF FORMING ELEMENT AND BUILDING**
SOLARDACHFORMELEMENT UND GEBÄUDE
ÉLÉMENT DE FORMATION DE TOIT SOLAIRE ET BÂTIMENT

(30) Priority: 02.01.2017 EP 17150035
(43) Date of publication of application: 06.11.2019
(73) Proprietor: SABIC Global Technologies B.V., 4612 PX Bergen op Zoom (NL)
(72) Inventor: VAN GIESEN, Roland, 6160 GA Geleen (NL); STEENBAKKERS-MENTING, Henrica Norberta Alberta Maria, 6160 GA Geleen (NL)
(74) Representative: Algemeen Octrooi- en Merkenbureau B.V.
(86) International application number: PCT/EP2017/084524
(87) International publication number: WO 2018/122200

(56) References cited:
- EP-A1- 0 050 462
- WO-A1-2015/132336
- CN-U- 85 202 919
- DE-A1- 4 416 027
- FR-A- 1 581 692
- FR-A3- 2 948 393
- JP-A- H07 293 122
- US-A- 4 095 383
- US-A1- 2005 108 983
- US-A1- 2007 062 146

## Description

### TECHNICAL FIELD

The present teachings relate to a roof and to a solar roof forming element a plurality of which may at least partially form the roof, which closes an opening of a building, each of said plurality of roof forming elements closing a part of said opening.

### BACKGROUND

WO 2008/082600 A1 relates to roof panel systems for use in building constructions. WO 2015/132336 A1 relates to a modular roof covering element, to a modular roof covering, and to a roof. JP H07 293122 A discloses a solar roof forming element.

### SUMMARY

An object of the present invention is to provide a light-weight, cost efficient and versatile solar roof forming element. Said object of the present invention is achieved by the various aspects of the present invention.

In a first aspect, the invention relates to a solar roof forming element as defined in claim 1, a plurality of which roof forming elements may at least partially form a roof which closes an opening of a building, each of said plurality of roof forming elements closing a part of said opening,
said roof forming element comprising
- an elongate polymer roof plate, defining a length and width of the roof forming element, the roof plate having an exterior side facing the exterior of the building, and having an interior side, opposite the exterior side, facing an inner space of the building, in use,
- an elongate cover for at least substantially completely covering the exterior side of the roof plate at a distance therefrom, connected to the roof plate, so as to define an interior space of the roof forming element between the cover and the roof plate, and
- coupling means for coupling the roof forming element in use to a further, neighbouring roof forming element of said plurality of roof forming elements extending in parallel to the roof forming element,
   the roof forming element comprising a plurality of elongate, wire shaped metal reinforcement elements incorporated within the roof plate and/or within the cover, distributed over the width of the roof forming element and extending along the length of the roof forming element.

The solar roof forming element according to the present teachings can be made very light and be manufactured in a cost efficient manner because of the polymer roof plate. Also, the roof forming element is highly resistant to burning objects from the outside. The plurality of elongate metal reinforcement elements may provide sufficient protection against such objects passing through the roof plate by melting of the roof plate material, or at least provide sufficient delay. Also, the solar roof forming element is provided with a photovoltaic element within the interior space thereof, wherein the cover is transparent to light. The cover may be configured such that an aesthetically pleasing outer view is achieved, for example resembling the shape of tiles or having a desired colour.

For the purpose of the invention, with "transparent to light" is meant transparent to light to such an extent that in use of the photovoltaic packaging electrical power is generated by the plurality of photovoltaic cells due to incident sunlight. For the purpose of the invention, with transparent to light is meant that the polymer front layer allows at least an average of 65%, preferably at least an average of 70%, more preferably at least an average of 75%, most preferably at least an average of 80% transmission of light in the wavelength range of 350 nm to 1200 nm as compared to a situation without the polymer front layer, when measuring the transmittance curves (full spectrum from 200-2500nm) using a Perkin Elmer Lambda 950 according to ASTM D1003 (used lamp: halogen in combination with deuterium lamp). That means that the transmission of light is measured according to ASTM D1003.

In the present description and claims, by "the plurality of elongate wire-shaped metal reinforcement elements extending along the length of the roof forming element" is meant that the metal elements extend, continuously, along at least substantially the length of the roof forming element, preferably along at least 75% of said length, further preferably along at least 90% of said length.

The roof plate may in an embodiment be extruded, that means have been made by extrusion.

The cover may in an embodiment have been extruded optionally in combination with vacuum forming. Alternatively it may have been moulded, preferably injection moulded.

In an embodiment, the plurality of elongate, wire shaped metal reinforcement elements have been incorporated within the roof plate, while the cover is free from such a plurality of elongate, wire shaped metal reinforcement elements.

In an embodiment, the plurality of elongate wire shaped metal reinforcement elements may comprise a plurality of metal wires. The cross section of the wire shaped metal reinforcement elements may be circular, or rectangular, or triangular, or oval, for example. The cross sectional area of the wire shaped metal reinforcement elements preferably is at least 0.5 mm² and preferably is at most 5 mm².

In an embodiment the plurality of elongate metal reinforcement elements may have been incorporated within the roof plate and/or within the cover by lamination, extrusion or injection moulding.

The plurality of elongate metal reinforcement elements have been distributed, preferably evenly, over the width of the roof forming element. At least five, preferably at least 10, metal elements are provided per metre width of the roof plate. The plurality of elongate metal reinforcement elements cover at most 10 % of the area of the roof plate. By the above two features, an effective resistance from burning objects as referred to above is achieved.

In an embodiment the roof plate and/or the beam as will be described below may include thermoplastic polymers, including co-polymers, or blends thereof. Non-limiting examples of thermoplastic polymers include polyethylene terephthalate (PET), polycarbonates (PC), polybutylene terephthalate (PBT), poly(l,4-cyclohexylidene cyclohexane-l,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or derivatives thereof, thermoplastic elastomers (TPE), terephthalic acid (TPA) elastomers, poly(cyclohexanedimethylene terephthalate) (PCT), polyethylene naphthalate (PEN), polyamides (PA), polysulfone sulfonate (PSS), polyether ether ketone (PEEK), polyether ketone ketone (PEKK), acrylonitrile butyldiene styrene (ABS), polyphenylene sulfide (PPS), co-polymers thereof, or blends thereof.

More preferred thermoplastic polymers include polypropylene, polyamides, polyethylene terephthalate, polycarbonates (PC), polybutylene terephthalate, poly(phenylene oxide) (PPO), polyetherimide, polyethylene, co-polymers thereof, or blends thereof. Even more preferred thermoplastic polymers include polypropylene, polyethylene, polyamides, polycarbonates (PC), co-polymers thereof, or blends thereof.

Examples of polypropylene include but are not limited to homopolymers of propylene, random copolymers of propylene with a C2 or C4 to C10 alpha olefin comonomer, for example ethylene; and heterophasic propylene copolymers comprising a matrix of propylene homopolymer and/or random copolymers of propylene and a dispersed propylene-alpha-olefin rubber phase, wherein the alpha-olefin may be chosen from the list consisting of C2 and C4 to C10 alpha olefin comonomers (multiple comonomers possible).

Examples of polyethylene include but are not limited to linear low density polyethylene (LLDPE), low density polyethylene (LDPE), high density polyethylene (HDPE), preferably HDPE.

The polymer composition of the roof plate and/or the beam may further comprise fillers and/or additives. Examples of (additional) fillers include but are not limited to: steel fibers/ whiskers/ flakes, glass fibers, talc, carbon black, carbon fibers, nanocomposites/ fibers.

Non-limiting examples of additional additives include coupling agents to promote adhesion between the polymeric matrix and continuous fibers, antioxidants, heat stabilizers, flow modifiers, flame retardants, UV stabilizers, UV absorbers, impact modifiers, colorants, or a combination thereof.

The roof plate and/or the beam may have been foamed, hollow or solid. If foamed, the foam part may have been coextruded with the remainder of the roof plate and/or beam.

In an embodiment the polymer roof plate has at least substantially been made of a polyolefin, further preferably polypropylene or polyethylene.

In an embodiment the polymer roof plate has been made of a reinforced polymer, preferably a glass fibre reinforced polymer, preferably glass fibre reinforced polypropylene.

The polymer roof plate may be prepared from a long glass fiber reinforced polypropylene, such as made by the process described in WO 2009/080281.

Pellets comprising a thermoplastic polymer sheath intimately surrounding glass filaments, which glass filaments are covered at least in part with an impregnating agent and extend in a longitudinal direction of said pellets, are for example commercially available under the brand name STAMAX.

A process for manufacturing such pellets is known from WO 2009/080281, which process comprises the subsequent steps of:
a) unwinding from a package of at least one continuous glass multifilament strand containing at most 2% by mass of a sizing composition;
b) applying from 0.5 to 20% by mass of an impregnating agent to said at least one continuous glass multifilament strand to form an impregnated continuous multifilament strand;
c) applying a sheath of thermoplastic polymer around the impregnated continuous multifilament strand to form a sheathed continuous multifilament strand; wherein the impregnating agent is non-volatile, has a melting point of at least 20°C below the melting point of the thermoplastic matrix, has a viscosity of from 2.5 to 100 cS at application temperature, and is compatible with the thermoplastic polymer to be reinforced.

The solar roof forming element comprises a photovoltaic element in its interior space, wherein the cover is transparent to light. In an embodiment, the photovoltaic element covers at least substantially the entire exterior side of the roof plate.

In an embodiment, the photovoltaic element is, or at least comprises a solar module, i.e. a packaged, connected assembly of solar cells being fully covered with an encapsulation layer. In another embodiment the photovoltaic element is foil-like, placed in the interior space. In an embodiment the photovoltaic element is exchangeably disposed in the interior space.

In an embodiment the roof forming element further comprises a beam, wherein the beam extends in the length direction of the roof plate, is located at a first longitudinal side of the roof plate, and protrudes from the interior side of the roof plate, wherein the other, second longitudinal side is free from such a beam protruding from the interior side of the roof plate, such that a combination of the roof plate and the beam has an L-shaped cross-section, wherein the roof forming element, at least in a mounted condition of a plurality of such roof forming elements forming the roof, is configured such that the second longitudinal side of the roof forming element is arranged to be supported by the first longitudinal side of a further, neighbouring one of said plurality of roof forming elements, so that the beam of the further roof forming element also supports the roof plate of the roof forming element. The respective roof plates of said roof forming element and further roof forming element may be at least substantially flush with respect to each other. An advantage of the roof forming element according to the present invention having the beam and roof plate is that because of the L-shape thereof, a roof can be formed in a very efficient manner using a plurality of such elements. The beam of a first one of said elements also supports a second one of said elements, at least in case of directly adjacent elements.

The beam is preferably integral with the roof plate, preferably made by extrusion. An integral combination of the beam and the roof plate provides bending and torsion stiffness to the elements. As a result, the elements may extend over the entire building opening covered by the roof, i.e. they may have a substantial length. Thus, a roof forming element according to the invention provides in one and the same element a building closure as well as a constructional provision. The elements according to the invention are highly cost-efficient since the main components, being the roof plate and the beam, are manufactured as an integral component, and have preferably been extruded. The elements are also highly versatile. Dependent on requirements they may be provided with for example a photovoltaic element within the interior space thereof. The cover may be configured such that an aesthetically pleasing outer view is achieved, for example resembling the shape of tiles or having a desired colour. Due to the use of a polymer for the integral combination of the roof plate and the beam, and highly preferable also for the cover, the roof forming element can be manufactured very cost efficient. The cover may in an embodiment also have been extruded or be extruded in combination with vacuum forming. Alternatively it may have been moulded, preferably injection moulded. Using a plurality of roof forming elements according to the invention, a roof can be easily and quickly formed.

In an embodiment the cover comprises at least one cover element which extends over the width of the roof forming element and over at least part of the length of the roof forming element.

The present invention also relates to a building, having a roof closing an opening of the building, wherein the roof has at least partly been formed by a plurality of solar roof forming elements according to the invention, each of said plurality of roof forming elements closing a part of said opening, wherein the plurality of roof forming elements is supported by a support structure of the building, which support structure surrounds the opening. Such a roof may be designed such that in use the second longitudinal side of a first one of said plurality of roof forming elements is supported by the first longitudinal side of a second, neighbouring one of said plurality of roof forming elements, so that the beam of the second roof forming element also supports the roof plate of said first roof forming element, and wherein the respective roof plates of said first and second roof forming elements are at least substantially flush with respect to each other.

The length of each of the plurality of roof forming elements may be about equal to a length of the roof, the plurality of roof forming elements being interconnected such that they close the entire opening in the building.

The building may comprise in the interior space of at least one of the plurality of roof forming elements a photovoltaic element, wherein the cover of that at least one roof forming element is transparent to light.

The roof of the building may further comprise a plurality of ceiling plates, each of the ceiling plates being connected to a free end of the beam of at least two neighbouring roof forming elements, so as to form a ceiling for the inner space of the building underneath the roof.

Each of the plurality of roof forming elements may have a length which is about equal to a length of the roof and each have a width which is a part of a width of the roof, wherein the plurality of roof forming elements are interconnected. The roof may also comprise a further roof forming element having the roof plate and the cover but is free from a beam at its first longitudinal side, which further roof forming element is interconnected to one of the outer ones of the interconnected roof forming elements at the first longitudinal side of that outer roof forming element, wherein the opening is closed entirely by the further roof forming element and the plurality of roof forming elements.

The roof of the building may be a pitched roof, wherein the opening closed by the roof is bounded by a ridge and a building wall, which define a first dimension of the roof, such as the length, and by further opposite building walls, which define a second dimension of the roof, such as the width of the roof.

### BRIEF DESCRIPTION OF DRAWINGS

The present teachings are described hereinafter with reference to the accompanying drawings in which examples of the invention are shown and in which like reference numbers indicate the same or similar elements.
- Figure 1 shows in three-dimensional, exploded view a first embodiment of a solar roof forming element according to the invention,
- Figure 2 shows in three-dimensional view a part of two roof forming elements according to figure 1, in interconnected condition,
- Figure 3 shows a front view of the roof forming elements according to figure 1,
- Figure 4 shows a front view of the two roof forming elements in interconnected condition according to figure 2,
- Figure 5 shows in three-dimensional view a part of a second embodiment of a solar roof forming element according to the invention,
- Figure 6 shows in three-dimensional view a part of two roof forming elements according to figure 5, in interconnected condition,
- Figure 7 shows in three-dimensional view a part of two solar roof forming elements according to a third embodiment of the invention, in interconnected condition,
- Figure 8 shows in three-dimensional, exploded view a part of a first embodiment of a roof according to the invention, comprising roof forming elements according to the third embodiment as shown in figure 7,
- Figure 9 shows a cross section of a part of the first embodiment of the roof according to the invention,
- Figure 10a shows in three-dimensional view a second embodiment of a roof according to the invention, comprising roof forming elements according to the second embodiment, and.
- Figure 10b shows in three-dimensional view a third embodiment of a roof according to the invention, comprising roof forming elements according to the first embodiment.

### DESCRIPTION OF EMBODIMENTS

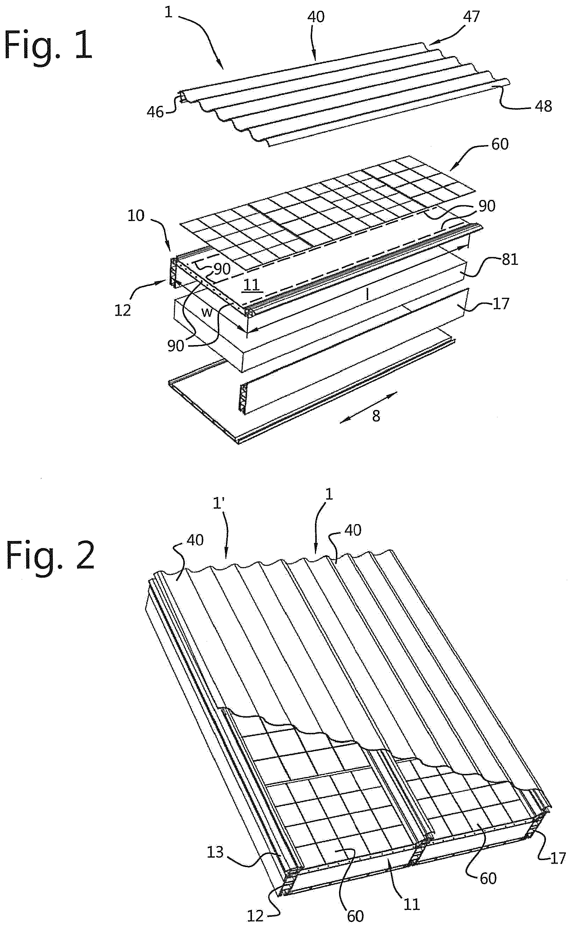

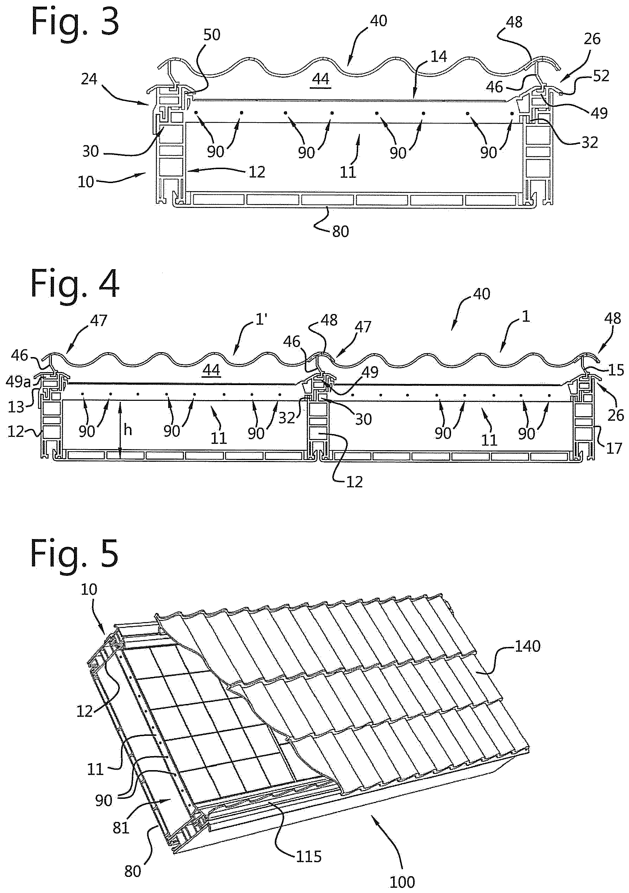

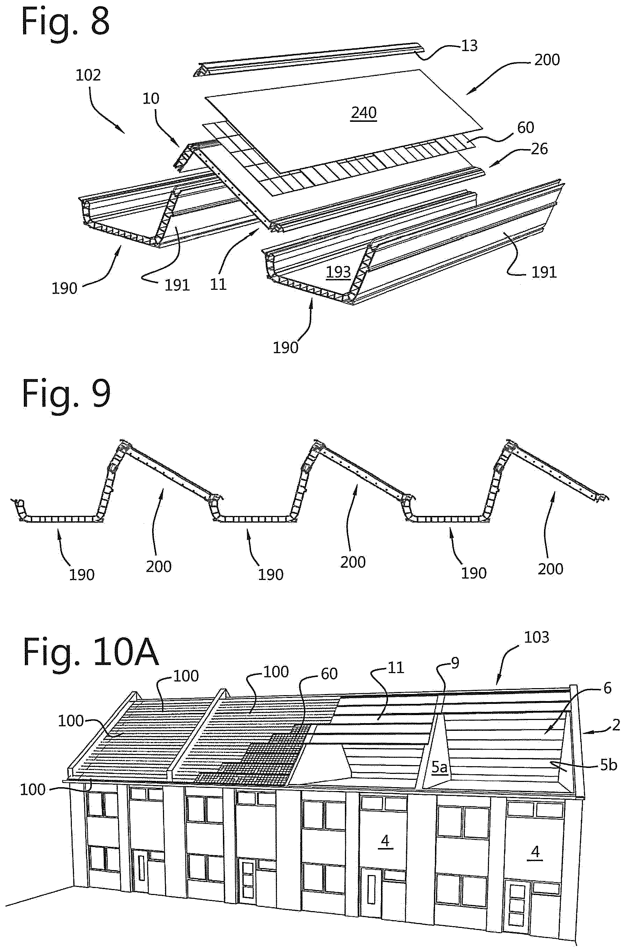

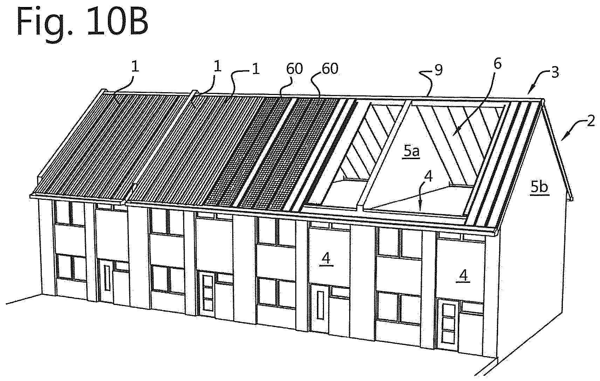

Figure 1 shows a roof forming element 1 in exploded view. Figure 5 shows a roof forming element 100. The roof forming elements 1, 100 and also other embodiments of roof forming elements described in the remainder of this description, are intended to be used for forming a roof of a building with a plurality of such elements. Said plurality of roof forming elements close an opening of the building of which the roof forms part. See figures 10a and 10b for examples of roofs 3, 103 according to the invention. For clearly showing the construction of the building and the roof, some roof forming elements or parts thereof are not shown. On the left side of figures 10a, 10b a completed roof according to the invention, of a further building, is shown. The opening 6 of a building 2, at least in the examples of figures 10a and 10b, is defined by a front wall 4 and a ridge beam 9, and by two opposite side walls 5a and 5b. The roof 3, 103 is a pitched roof, extending from the front wall 4, or at least from a lower extremity, to a ridge 9, or at least a higher extremity, being supported by said walls 5a, 5b forming a support structure for the roof 3, 103. The opening 6 is free from any support elements such as rafters and purlins. In an embodiment, the opening may have one or more purlins, for the purpose of forming a connection between the side walls.

If in the below description a number is given the addition ', this is only done for the purpose of a clear description of the invention as to the mutual connection of parts. The parts, for example 100, 100', are actually identical to each other.

Each of the roof forming elements comprises an elongate integral extruded base part 10 having a roof plate 11 and a beam 12. In another embodiment the roof plate 11 and the beam 12 may be provided as separate components, wherein the beam 12 may be provided as part of a roof support of the building, such as forming a rafter extending between the mentioned lower extremity, in the building 2 formed by the front wall 4, and the ridge beam 9. The roof plate 11 defines a length I, in a length direction 8, and width w of the roof forming element 1, the roof plate having an exterior side 14 facing the exterior of the building in use, and an interior side 16, opposite the exterior side, facing an inner space of the building, in use.

The beam 12 extends in the length direction of the roof plate 11 and is located at a first longitudinal side 24 of the roof plate 11. It protrudes downwards from the interior side 16 of the roof plate, having a height h of 15 cm., at least in the present example. The width w of the roof plate 11 is 70 cm., at least in the present example. The ratio of height h : width w depends on the requirements of a specific roof to be formed using said roof forming element 1.

A second longitudinal side 26 of the roof plate 11 is free from such a beam protruding downwards from the interior side. As shown in figure 1 and 3 in particular, the base part 10 having the roof plate 11 and the beam 12 has an L-shaped cross-section. The roof forming element has a length I. This length may be chosen in dependence of the relevant dimension of a building opening to be spanned.

The first longitudinal side 24 is provided with a groove 30 facing upwards, in the length direction. The second longitudinal side 26 has a rib 32 facing downwards, also in the length direction. The groove 30 and rib 32 are configured such that the rib 32 of a further roof forming element 1' (figure 4), being the same as the roof forming element 1, can be received in the groove 30 of the roof forming element 1, such that the roof forming element 1 supports said further element 1' at that location. This means that the beam 12 of the roof forming element 1 also supports the roof plate of said further roof forming element 1'. The roof forming element 1, more specifically said rib 32 and groove 30, is configured such that in a coupled condition to a further, neighbouring roof forming element as described, the respective roof plates of said roof forming element 1 and said further roof forming elements are flush with respect to each other. See figure 4. Said groove 30 and rib 32 are part of coupling means for coupling the roof forming element to a further, neighbouring roof forming element.

The roof forming element 1 has a plurality of elongate, wire shaped, metal reinforcement elements incorporated within the roof plate 11, distributed over the width of the roof forming element 1 and extending along the length I of the roof forming element. More specifically the plurality of elongate metal reinforcement elements are formed as eight steel wires 90 incorporated within the roof plate 11 by means of extrusion, i.e. during extrusion of the base part including the roof plate. Figure 1 shows, for the purpose of clarification, three of such wires 90 which are displayed by means of dashed lines. All of the wires 90 extend over the entire length l of the roof plate, incorporated within the roof plate 11. The number of wires may be less, or more, such as 4 to 7, or 9 or 10 or more. The plurality of wires are distributed over the width of the roof forming element such that at least five, preferably at least 10, wires are provided per metre width of the roof plate 11. The wires have a circular cross section having a cross sectional area ranging from 0.5 - 5 mm², in the present example about 1.5 mm².

The roof forming element 1 also has a cover 40 for at least substantially completely covering the exterior side 14 of the roof plate 11 at a distance therefrom, so as to define an interior space 44 between the cover 40 and the exterior side 14 closed from external influences. The cover 40 extends over the entire width of the roof plate 11 and over the length I of the roof plate 11. The cover 40 is corrugated and closes the interior space 44. The cover 40 protects the interior space 44 from external influences, such as precipitation, at the longitudinal sides of the roof forming element 1, wherein the roof forming element 1 may comprise a closing element (not shown) at both its end faces seen in the length direction, extending between the roof plate and the cover, for sealing the interior space of the roof forming element at the respective end face. The top end face of the roof forming element, at least when used for forming a pitched roof, may also be closed by a ridge beam functioning as closing element.

The cover has a wall portion 46 at a first longitudinal side 47. The wall portion 46 is received in a groove 49 at the second longitudinal side 26 of the roof forming element 1' disposed left from the element 1, see figure 4. Alternatively, the wall portion 46 may be received in a groove 49a of an end piece 13 in case element 1 is the most left element in a row of such elements, see figure 4. In coupled, i.e. interconnected condition of two or more roof forming elements 1, as shown in figures 2 and 4, the wall portion 46 of the cover 40 of a first one 1 of the roof forming elements supports the second longitudinal side 48 of the cover 40 of a further, neighbouring one 1' of the roof forming elements 1, 1'. Said second longitudinal side 48 overlaps the first longitudinal side 47 of the neighbouring cover 40. This way, a connection between said two adjacent elements 1, 1' is not only provided by the above described groove 30 and rib 32 but also by the wall 46 and side 48 of covers 40 of the adjacent elements 1, 1'. In order to clarify the invention, figure 4 also shows an end piece 15 at the second longitudinal side 26 of the most right element 1 in a row of such elements. The end piece 15 supports the second longitudinal side 48 of the cover of element 1. Also shown in figure 4 is an end beam 17, supporting the second longitudinal side 26 of the element 1.

The roof plate 11 of the roof forming element 1 has a rib 50 at the first longitudinal side 24 of the roof plate 11, on top of the exterior side 14. The roof plate also has a flange element 52 at the second longitudinal side 26 of the roof plate 11, which is arranged to overlap, or, hook over, the rib 50 of a further, neighbouring roof forming element coupled to the roof forming element 1.

The base part 10 having the roof plate 11 and the beam 12 is at least substantially made of glass fibre reinforced polypropylene, preferably polypropylene reinforced with long glass fibers (PP-LGF).

The roof forming element 1 also comprises a photovoltaic element 60 in its interior space 44. The photovoltaic element is a solar module, i.e. a packaged, connected assembly of solar cells being fully covered with an encapsulation layer. The cover 40 is transparent to light such that in use electrical power can be generated by the photovoltaic element 60 due to incident sunlight. The photovoltaic element 60 covers about the entire surface of the roof plate 11. Alternatively, part of said surface may be covered with a photovoltaic element. When in use, some or all of the plurality of roof forming elements forming the roof may not be equipped with a photovoltaic element. The amount of photovoltaic elements in the plurality of roof forming elements may be chosen based on for example the desired total combined amount of electrical energy to be generated by the photovoltaic elements.

The roof forming elements 1 are configured to extend in one piece from a first, such as the lower, or left, extremity to a second, such as the higher, or right, extremity of an opening of the building in the absence of any other support structure in the opening. The beams 12 provide the required bending stiffness of the roof forming elements 1. The plurality of roof forming elements 1 are coupled to each other. The roof also comprises an additional roof element having the roof plate and the cover but being free from a beam at its first longitudinal side, which additional roof element is coupled to one of the outer ones of the mutually coupled roof forming elements at the first longitudinal side of that outer roof forming element, wherein the opening is closed entirely by the additional roof element and the plurality of roof forming elements.

A roof formed from a plurality of elements 1 may comprise a plurality of ceiling plates 80, each covering the space between two neighbouring beams 12 of two respective neighbouring roof forming elements 1, being connected to a free end of said beams, preferably by means of a snap/lock connection. The ceiling plates are also extruded, at least in the present example. As a result, a ceiling is formed for an inner space of the building underneath the roof. Optionally, insulation material 81 (not shown in figures 3 and 4) may be provided in said space between the ceiling panel 80 and the roof plate 11.

In the example according to figure 10b, showing a roof 3 during assembly, the opening 6 is closed by a plurality of interconnected roof forming elements 1 each extending in vertical direction and spanning the opening 6 between the front wall 4, or at least the gutter, and the ridge 9. The elements 1 are partly shown.

Figure 5 shows a roof forming element 100 as an alternative embodiment of a roof forming element according to the invention. The roof forming element 100 is identical to the roof forming element 1, except for the cover 140 and for the end piece 115. Roof forming element 100 has a cover 140 also having a roof tile pattern, but now in width direction of the roof forming element 100. This means that a plurality of such elements 100 are to be provided in the building opening such that they extend in a horizontal direction. The end piece 115 is designed to follow the interior contour of the cover 140. In the example according to figure 10a, showing a roof 103, the opening 6 is closed by a plurality of interconnected roof forming elements 100 each extending in horizontal direction and spanning the opening 6 between the side walls 5a, 5b.

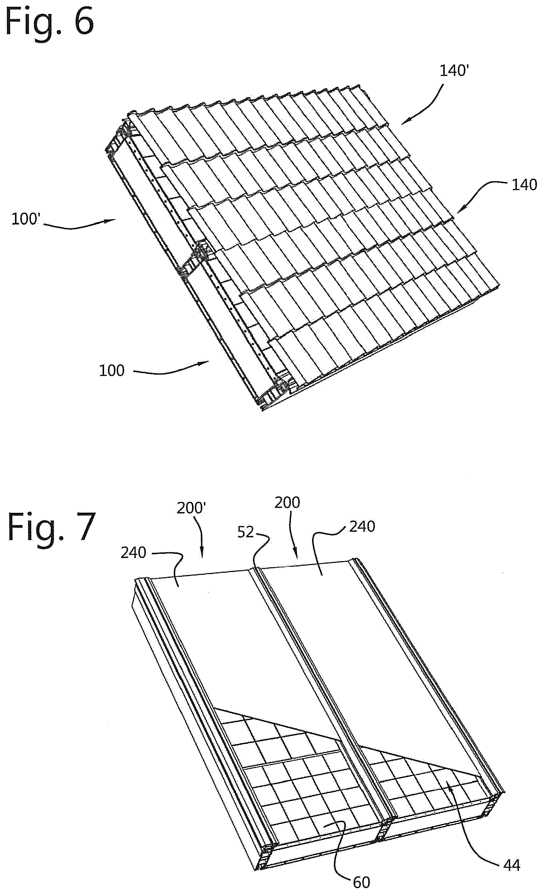

Figure 7 shows two roof forming elements 200, 200', interconnected, which roof forming elements 200 are an alternative embodiment of roof forming elements according to the invention. The roof forming element 200, 200' is identical to the roof forming element 1, 100, except for the cover. Roof forming element 200, 200' has a cover 240 in the form of a glass plate being placed on top of the roof plate 11 such that it is at a distance in the range of about 1 mm. to about 5 cm. from the exterior side 14. It defines an interior space 44 between the exterior side 14 and the glass plate 240 in which interior space a photovoltaic element 60 may be provided. At the first longitudinal side, the cover 240 is overlapped by the flange 52 element of a further, neighbouring roof forming element, as shown in figure 5. Optionally, the above mentioned groove 49 may be closed by a closing strip, or may be absent at all.

Figure 8 and figure 9 show a part of an industrial roof 102 comprising a plurality of roof forming elements 200. The roof has a plurality of mutually identical, spaced apart support beams 190, made of a polymer such as polycarbonate. At least in the present example, the support beams are transparent to light such that daylight can pass trough the support beams to the inner space of the building. The beams 190 are extruded and have a flat bottom portion 193, a first wall part 191 at the one longitudinal side and a second wall part 192 opposite the first wall part 191 at the other longitudinal side of the bottom portion 193. The first wall part 191 is of greater height and supports the beam 12 of a roof forming element. The second wall part 192 of a neighbouring support beam 190, less high than the first wall part 191, supports that same roof forming element 200 at its second longitudinal side 26. As a result, the roof plate 11 of the roof forming element 200 is oriented under an angle with respect to the horizontal, or, with respect to the bottom plate 193 of the support beam 190. The beams 190 as well as the roof forming elements 200 preferably extend over the entire opening of the building covered by the roof 102. Of course elements 100 may be used alternatively to or in combination with elements 200.

An example of a method of manufacturing by extrusion the base part having the elongate, wire shaped, metal reinforcement elements, such as the wires 90, comprises the step of providing an extrusion die, adapted to the cross-sectional shape of the base part to be formed and adapted to the requirements as to the wires to be incorporated within the base part to be formed, The method comprises the further steps of feeding a polymer composition, such as (melted) polymer granules, via an extruder to the extrusion die. Said polymer composition is used for forming by extrusion the base part. Also, the wires are fed to the extrusion die. Using the extrusion die, and the extrusion process, the base part is formed while incorporating the wires within the base part during the forming of the base part. A feed speed of the wires to the die is set equal to the speed of extrusion.

## Claims

1. A solar roof forming element (1, 100), a plurality of which may at least partially form a roof (3, 103) which closes an opening (6) of a building (2), each of said plurality of roof forming elements closing a part of said opening,
said roof forming element comprising
- an elongate polymer roof plate (11), defining a length (I) and width (w) of the roof forming element, the roof plate having an exterior side (14) facing the exterior of the building, and having an interior side (16), opposite the exterior side, facing an inner space of the building, in use,
- an elongate cover (40) for at least substantially completely covering the exterior side of the roof plate (11) at a distance therefrom, connected to the roof plate, so as to define an interior space (44) of the roof forming element between the cover and the roof plate, the cover being transparent to light,
- a photovoltaic element (60), provided in the interior space, and
- coupling means for coupling the roof forming element in use to a further, neighbouring roof forming element (1', 100') of said plurality of roof forming elements extending in parallel to the roof forming element,
the roof forming element comprising a plurality of elongate, wire shaped metal reinforcement elements (90) incorporated within the roof plate (11) and/or within the cover (40), distributed over the width of the roof forming element and extending along the length of the roof forming element,
wherein the plurality of elongate metal reinforcement elements (90) have been distributed over the width of the roof forming element (1, 100) such that at least five, preferably at least 10, metal elements are provided per metre width of the roof plate (11), and
wherein, in plan view, the plurality of elongate metal reinforcement elements (90) covers at most 10 % of the area of the roof plate (11).

2. A solar roof forming element according to claim 1, the plurality of elongate metal reinforcement elements (90) being a plurality of metal wires.

3. A solar roof forming element according to claim 1 or 2, the plurality of elongate metal reinforcement elements (90) being incorporated within the roof plate (11) and/or within the cover (40) by lamination, extrusion or injection moulding.

4. A solar roof forming element according to any one of the preceding claims, wherein the plurality of elongate metal reinforcement elements (90) have been incorporated within the roof plate (11) while forming the roof plate by means of extrusion.

5. A solar roof forming element according to any one of the preceding claims, wherein the polymer roof plate (11) has at least substantially been made of a polymer chosen from the group consisting of thermoplastic polymers, including copolymers, or blends thereof.

6. A solar roof forming element according to any one of the preceding claims 1-4, wherein the polymer roof plate (11) has at least substantially been made of a composition comprising a polymer chosen from the group consisting of thermoplastic polymers, including co-polymers, or blends thereof and a reinforcing filler, for example a glass fibre, steel fiber, carbon fiber.

7. A solar roof forming element according to claim 6, wherein the polymer roof plate (11) has been made of a reinforced polymer, preferably a glass fibre reinforced polymer, preferably glass fibre reinforced polypropylene.

8. A solar roof forming element according to any one of the preceding claims, the photovoltaic element (60) being exchangeably disposed in the interior space (44).

9. A solar roof forming element according to any one of the preceding claims, wherein the photovoltaic element (60) covers at least substantially the entire exterior side (16) of the roof plate (11).

10. A solar roof forming element (1, 100) according to any one of the preceding claims, further comprising a beam (12), wherein the beam extends in the length direction of the roof plate (11), is located at a first longitudinal side (24) of the roof plate, and protrudes from the interior side (16) of the roof plate, wherein the other, second longitudinal side (26) is free from such a beam protruding from the interior side of the roof plate, such that a combination of the roof plate (11) and the beam (12) has an L-shaped cross-section,
wherein the roof forming element (1, 100), at least in a mounted condition of a plurality of such roof forming elements forming the roof (3, 103), is configured such that the second longitudinal side (26) of the roof forming element (1, 100) is arranged to be supported by the first longitudinal side (24) of a further, neighbouring one (1', 100') of said plurality of roof forming elements, so that the beam (12) of the further roof forming element also supports the roof plate (11) of the roof forming element, and so that the respective roof plates of said roof forming element and further roof forming element are flush with respect to each other,
the beam (12) preferably being integral with the roof plate, preferably made by extrusion.

11. A solar roof forming element according to any one of the preceding claims, the cover (40) comprising at least one cover element which extends over the width of the roof forming element and over at least part of the length of the roof forming element.

12. Building (2), having a roof (3, 103) closing an opening (6) of the building, wherein the roof is at least partly formed by a plurality of solar roof forming elements (1, 100) according to any one of the preceding claims 1-11, each of said plurality of roof forming elements closing a part of said opening, wherein the plurality of roof forming elements are supported by a support structure of the building, which support structure surrounds the opening.

## Patentansprüche

1. Solardachformelement (1, 100), wobei mehrere davon teilweise ein Dach (3, 103) bilden können, das eine Öffnung (6) eines Gebäudes (2) verschließt, wobei jedes der mehreren Dachformelemente einen Teil der Öffnung verschließt, wobei das Dachformelement Folgendes umfasst:
- eine längliche Polymerdachplatte (11), die eine Länge (l) und eine Breite (w) des Dachformelements definiert, wobei die Dachplatte eine Außenseite (14) aufweist, die zur Außenseite des Gebäudes zeigt, und eine Innenseite (16) aufweist, der Außenseite gegenüberliegend, die, in Verwendung, zu einem Innenraum des Gebäudes zeigt,
- eine längliche Abdeckung (40) für ein zumindest im Wesentlichen vollständiges Abdecken der Außenseite der Dachplatte (11) bei einem Abstand davon, verbunden mit der Dachplatte, um einen Innenraum (44) des Dachformelements zwischen der Abdeckung und der Dachplatte zu definieren, wobei die Abdeckung lichtdurchlässig ist,
- ein Photovoltaikelement (60), bereitgestellt im Innenraum, und
- Kopplungsmittel zum Koppeln des Dachformelements in Verwendung mit einem weiteren, benachbarten Dachformelement (1', 100') der mehreren Dachformelemente, die sich parallel zum Dachformelement erstrecken,
wobei das Dachformelement mehrere längliche, drahtförmige Metallverstärkungselemente (90) umfasst, die in die Dachplatte (11) und/oder in die Abdeckung (40) integriert sind, über die Breite des Dachformelements verteilt sind und sich entlang der Länge des Dachformelements erstrecken,
wobei die mehreren länglichen Metallverstärkungselemente (90) über die Breite des Dachformelements (1, 100) verteilt wurden, sodass mindestens fünf, vorzugsweise mindestens 10, Metallelemente pro Meter Breite der Dachplatte (11) bereitgestellt sind, und
wobei, in der Draufsicht, die mehreren länglichen Metallverstärkungselemente (90) höchstens 10 % der Fläche der Dachplatte (11) abdecken.

2. Solardachformelement nach Anspruch 1, wobei die mehreren länglichen Metallverstärkungselemente (90) mehrere Metalldrähte sind.

3. Solardachformelement nach Anspruch 1 oder 2, wobei die mehreren länglichen Metallverstärkungselemente (90) durch Laminierung, Extrusion oder Spritzgießen in die Dachplatte (11) und/oder in die Abdeckung (40) integriert werden.

4. Solardachformelement nach einem der vorhergehenden Ansprüche, wobei die mehreren länglichen Metallverstärkungselemente (90) während des Bildens der Dachplatte mittels Extrusion in die Dachplatte (11) integriert wurden.

5. Solardachformelement nach einem der vorhergehenden Ansprüche, wobei die Polymerdachplatte (11) zumindest im Wesentlichen aus einem Polymer gefertigt wurde, das aus der Gruppe ausgewählt wird, die aus thermoplastischen Polymeren, einschließlich Kopolymeren oder Mischungen davon, besteht.

6. Solardachformelement nach einem der vorhergehenden Ansprüche 1-4, wobei die Polymerdachplatte (11) zumindest im Wesentlichen aus einer Zusammensetzung gefertigt wurde, umfassend ein Polymer, das aus der Gruppe ausgewählt wird, die aus thermoplastischen Polymeren, einschließlich Kopolymeren oder Mischungen davon, besteht, und einen Verstärkungsfüllstoff, beispielsweise eine Glasfaser, Stahlfaser, Kohlenstofffaser.

7. Solardachformelement nach Anspruch 6, wobei die Polymerdachplatte (11) aus einem verstärkten Polymer, vorzugsweise einem glasfaserverstärkten Polymer, vorzugsweise einem glasfaserverstärkten Polypropylen, gefertigt wurde.

8. Solardachformelement nach einem der vorhergehenden Ansprüche, wobei das Photovoltaikelement (60) austauschbar im Innenraum (44) angeordnet ist.

9. Solardachformelement nach einem der vorhergehenden Ansprüche, wobei das Photovoltaikelement (60) zumindest im Wesentlichen die gesamte Außenseite (16) der Dachplatte (11) abdeckt.

10. Solardachformelement (1, 100) nach einem der vorhergehenden Ansprüche, ferner umfassend einen Träger (12), wobei sich der Träger in der Längsrichtung der Dachplatte (11) erstreckt, an einer ersten Längsseite (24) der Dachplatte befindlich ist und aus der Innenseite (16) der Dachplatte herausragt, wobei die andere, zweite Längsseite (26) frei von einem solchen Träger ist, der aus der Innenseite der Dachplatte herausragt, sodass eine Kombination aus der Dachplatte (11) und dem Träger (12) einen L-förmigen Querschnitt aufweist,
wobei das Dachformelement (1, 100), zumindest in einem montierten Zustand von mehreren solcher Dachformelemente, die das Dach (3, 103) bilden, so ausgelegt ist, dass die zweite Längsseite (26) des Dachformelements (1, 100) angeordnet ist, um durch die erste Längsseite (24) eines weiteren, benachbarten (1', 100') der Dachformelemente gestützt zu werden, sodass der Träger (12) des weiteren Dachformelements auch die Dachplatte (11) des Dachformelements stützt, und sodass die entsprechenden Dachplatten des Dachformelements und eines weiteren Dachformelements relativ zueinander bündig sind,
wobei der Träger (12) vorzugsweise integral mit der Dachplatte ist, vorzugsweise durch Extrusion gefertigt.

11. Solardachformelement nach einem der vorhergehenden Ansprüche, wobei die Abdeckung (40) zumindest ein Abdeckungselement umfasst, das sich über die Breite des Dachformelements und über zumindest einen Teil der Länge des Dachformelements erstreckt.

12. Gebäude (2) mit einem Dach (3, 103), das eine Öffnung (6) des Gebäudes verschließt, wobei das Dach zumindest teilweise durch mehrere Solardachformelemente (1, 100) nach einem der vorhergehenden Ansprüche 1-11 gebildet ist, wobei jedes der mehreren Dachformelemente einen Teil der Öffnung verschließt, wobei die mehreren Dachformelemente durch eine Stützstruktur des Gebäudes gestützt werden, wobei die Stützstruktur die Öffnung umgibt.

## Revendications

1. Élément de formation de toit solaire (1, 100) dont une pluralité peut former au moins en partie un toit (3, 103) qui ferme une ouverture (6) d'un bâtiment (2), chaque élément de ladite pluralité d'éléments de formation de toit fermant une partie de ladite ouverture,
ledit élément de formation de toit comprenant
une plaque de toit en polymère allongée (11), définissant une longueur (l) et une largeur (W) de l'élément de formation de toit, la plaque de toit ayant un côté extérieur (14) faisant face à l'extérieur du bâtiment, et ayant un côté intérieur (16), opposé au côté extérieur, faisant face à un espace intérieur du bâtiment, en utilisation,
un couvercle allongé (40) pour au moins couvrir sensiblement complètement le côté extérieur de la plaque de toit (11) à une distance de celle-ci, raccordé à la plaque de toit, de façon à définir un espace intérieur (44) de l'élément de formation de toit entre le couvercle et la plaque de toit, le couvercle laissant passer la lumière,
un élément photovoltaïque (60), placé dans l'espace intérieur, et
des moyens de couplage pour coupler l'élément de formation de toit en utilisation à un autre élément de formation de toit voisin (1', 100') de ladite pluralité d'éléments de formation de toit s'étendant en parallèle de l'élément de formation de toit,
l'élément de formation de toit comprenant une pluralité d'éléments de renforcement métalliques en forme de fils (90) incorporés à l'intérieur de la plaque de toit (11) et/ou à l'intérieur du couvercle (40), répartis sur la largeur de l'élément de formation de toit et s'étendant sur la longueur de l'élément de formation de toit,
dans lequel la pluralité d'éléments de renforcement métalliques allongés (90) ont été répartis sur la largeur de l'élément de formation de toit (1, 100) de façon à ce qu'au moins cinq, de préférence au moins 10, éléments métalliques soient placés par mètre en largeur de la plaque de toit (11), et
dans lequel en vue en plan, la pluralité d'éléments de renforcement métalliques allongés (90) couvre au moins 10 % de la surface de la plaque de toit (11).

2. Élément de formation de toit solaire selon la revendication 1, dans lequel la pluralité d'éléments de renforcement métalliques allongés (90) est une pluralité de fils métalliques.

3. Élément de formation de toit solaire selon la revendication 1 ou 2, dans lequel les éléments de la pluralité d'éléments de renforcement métalliques allongés (90) sont incorporés à l'intérieur de la plaque de toit (11) et/ou à l'intérieur du couvercle (40) par stratification, extrusion ou moulage par injection.

4. Élément de formation de toit solaire selon l'une quelconque des revendications précédentes, dans lequel les éléments de la pluralité d'éléments de renforcement métalliques allongés (90) ont été incorporés à l'intérieur de la plaque de toit (11) pendant la formation de la plaque de toit par extrusion.

5. Élément de formation de toit solaire selon l'une quelconque des revendications précédentes, dans lequel la plaque de toit en polymère (11) a au moins sensiblement été fabriquée en un polymère choisi parmi le groupe constitué des polymères thermoplastiques, incluant les copolymères, ou des mélanges de ceux-ci.

6. Élément de formation de toit solaire selon l'une quelconque des revendications précédentes 1 à 4, dans lequel la plaque de toit en polymère (11) a au moins sensiblement été fabriquée en une composition comprenant un polymère choisi parmi le groupe constitué des polymères thermoplastiques, incluant les copolymères, ou des mélanges de ceux-ci et d'un agent de remplissage de renforcement, par exemple une fibre de verre, une fibre d'acier, une fibre de carbone.

7. Élément de formation de toit solaire selon la revendication 6, dans lequel la plaque de toit en polymère (11) a été fabriquée en polymère renforcé, de préférence un polymère renforcé de fibre de verre, de préférence un polypropylène renforcé de fibre de verre.

8. Élément de formation de toit solaire selon l'une quelconque des revendications précédentes, dans lequel l'élément photovoltaïque (60) est disposé de façon amovible dans l'espace intérieur (44).

9. Élément de formation de toit solaire selon l'une quelconque des revendications précédentes, dans lequel l'élément photovoltaïque (60) couvre au moins sensiblement l'entièreté du côté extérieur (16) de la plaque de toit (11) .

10. Élément de formation de toit solaire (1, 100) selon l'une quelconque des revendications précédentes, comprenant en outre une poutre (12), dans lequel la poutre s'étend dans le sens de la longueur de la plaque de toit (11), est située sur un premier côté longitudinal (24) de la plaque de toit, et fait saillie depuis le côté intérieur (16) de la plaque de toit, dans lequel l'autre second côté longitudinal (26) est exempt d'une telle poutre faisant saillie depuis le côté intérieur de la plaque de toit, de sorte qu'une combinaison de la plaque de toit (11) et de la poutre (12) présente une section transversale en forme de L,
dans lequel l'élément de formation de toit (1, 100), au moins dans un état monté d'une pluralité desdits éléments de formation de toit formant le toit (3, 103), est configuré de sorte que le second côté longitudinal (26) de l'élément de formation de toit (1, 100) est disposé de façon à être supporté par le premier côté longitudinal (24) d'un autre élément voisin (1', 100') de ladite pluralité d'éléments de formation de toit, afin que la poutre (12) de l'autre élément de formation de toit supporte également la plaque de toit (11) de l'élément de formation de toit, et que les plaques de toit respectives dudit élément de formation de toit et dudit autre élément de formation de toit soient alignées l'une avec l'autre,
la poutre (12) étant de préférence intégrée à la plaque de toit, de préférence fabriquée par extrusion.

11. Élément de formation de toit solaire selon l'une quelconque des revendications précédentes, dans lequel le couvercle (40) comprend au moins un élément de couvercle qui s'étend sur la largeur de l'élément de formation de toit et sur au moins une partie de la longueur de l'élément de formation de toit.

12. Bâtiment (2) ayant un toit (3, 103) fermant une ouverture (6) du bâtiment, dans lequel le toit est au moins en partie formé par une pluralité d'éléments de formation de toit (1, 100) selon l'une quelconque des revendications 1 à 11, chaque élément de ladite pluralité d'éléments de formation de toit fermant une partie de ladite ouverture, dans lequel la pluralité d'éléments de formation de toit sont supportés par une structure de support du bâtiment, laquelle structure de support entoure l'ouverture.
